# EUROPÄISCHE PATENTSCHRIFT

(11) **EP 1 295 777 B1**
(45) Veröffentlichungstag und Bekanntmachung des Hinweises auf die Patenterteilung: **22.02.2006**
(21) Anmeldenummer: 02020564.7
(22) Anmeldetag: 17.09.2002
(51) Int. Cl.: B62D 1/11, B62D 1/10

(54) **Lenkradeinheit für ein Kraftfahrzeug**
Steering wheel unit for a motor vehicle
Unité de volant de direction pour véhicule automobile

(30) Priorität: 19.09.2001 DE 10146175
(43) Veröffentlichungstag der Anmeldung: 26.03.2003
(73) Patentinhaber: TRW Automotive Safety Systems GmbH, 63743 Aschaffenburg (DE)
(72) Erfinder: Kerner, Wolfgang, 72184 Eutingen (DE); Kreuzer, Martin, 63839 Kleinwallstadt (DE); Nigrin, Anke, 98693 Ilmenau (DE)
(74) Vertreter: Kitzhofer, Thomas

(56) Entgegenhaltungen:
- DE-A- 3 013 996
- DE-C- 10 020 085
- US-A- 4 123 948
- US-A- 4 368 454

## Beschreibung

Die Erfindung betrifft eine Lenkradeinheit für ein Kraftfahrzeug, insbesondere für einen Personenkraftwagen, mit den Merkmalen des Oberbegriffs des Anspruchs 1.

Eine derartige Lenkradeinheit ist beispielsweise aus der älteren deutschen Patentanmeldung 100 20 085.0 vom 22. April 2000 bekannt und besitzt eine Anschlußnabe, die mit einer Lenkwelle einer Lenkungsanordnung drehfest verbindbar ist. Die Lenkradeinheit weist außerdem einen Lenkradkranz auf, der über Speichen drehfest mit der Anschlußnabe verbunden ist. Des weiteren ist ein Mittelteil vorgesehen, das üblicherweise einen Prallkörper sowie eine Airbag-Einheit aufweist. Das Mittelteil ist über ein Distanzelement relativ zu Lenkwelle und Lenkradkranz drehbar an der Anschlußnabe gelagert. Dieses Distanzelement ist an einem Ende drehfest mit dem Mittelteil verbunden und am anderen Ende drehbar an der Anschlußnabe gelagert. Des weiteren ist das Distanzelement als Crashelement ausgebildet, das ab einem vorbestimmten Versagenswert einer das Mittelteil in Richtung Anschlußnabe antreibenden Kraft versagt. Die gattungsgemäße Lenkradeinheit weist außerdem eine Kopplungseinrichtung auf, die das Mittelteil gegenüber einer Drehbewegung des Lenkradkranzes stillsetzt. Bei der bekannten Lenkradeinheit ist diese Kopplungseinrichtung durch ein Magnetkraftgetriebe mit Magnetanordnungen gebildet, die in die Lenkradeinheit räumlich integriert sind.

Die US 4,368,454 offenbart eine Lenkvorrichtung, bei der eine Aufprallplatte zentral im Lenkrad und in Blickrichtung des Fahrers angeordnet ist. Die Aufprallplatte ist rotatorisch nicht mit dem Lenkradkranz gekoppelt und bleibt bei einer Drehung des Lenkrads in einer konstanten Lage. Sie ist jedoch in der Lenkradabe über Gleit- oder Wälzlager befestigt.

Aus der DE 43 28 562 C1 ist eine weitere Lenkradanordnung bekannt, die ein Mittelteil aufweist, das relativ zu Lenkwelle und Lenkradkranz drehbar gelagert und mittels einer Kopplungseinrichtung gegenüber einer Drehbewegung des Lenkradkranzes stillgesetzt ist. Die Kopplungseinrichtung ist bei dieser Lenkradeinheit durch ein Zahnradgetriebe mit Kegelzahnrädern gebildet, wobei eine Trägerplatte, an der die Kegelzahnräder gelagert sind, durch Drehverstellungen des Lenkradkranzes angetrieben ist.

Im Crashfall kann es dazu kommen, daß der Fahrzeugführer auf diese Lenkradeinheit aufprallt, wobei er regelmäßig zuerst auf den am weitesten in den Fahrzeuginnenraum hineinragenden Lenkradkranz auftrifft. Üblicherweise ist dieser Lenkradkranz über eine entsprechende Formgebung seiner Speichen als Crashelement ausgebildet, so daß die Speichen unter einer Absorption von Aufprallenergie nachgeben, wobei sich der Lenkradkranz in Richtung Anschlußnabe verstellt. Diese Verstellbewegung des Lenkradkranzes führt dazu, daß im Verlauf des Aufpralls der Fahrzeugführer zeitlich versetzt auch auf das Mittelteil auftrifft. Da auch das Distanzelement, über welches das Mittelteil an der Anschlußnabe abgestützt ist, ein Crashelement bildet, versagt auch diese Abstützung bei hinreichend großen Kräften.

Diese Bauweise hat zur Folge, daß sich beim Aufprall des Fahrzeugführers auf die Lenkradeinheit zunächst eine erste Kraftspitze ausbildet, wenn sich die vom Fahrzeugführer auf den Lenkradkranz übertragenen Kräfte bis zum Versagen der Speichen aufbauen. Des weiteren bildet sich zeitlich verzögert eine zweite Kraftspitze auf, wenn die vom Fahrzeugführer auf das Mittelteil übertragenen Kräfte bis zum Versagen des Distanzelements zunehmen. Da jede Kraftspitze die am Fahrzeugführer wirksamen Verzögerungskräfte erhöht, besteht der Wunsch, die zweite Kraftspitze zu reduzieren bzw. zu eliminieren. Eine reduzierte oder fehlende zweite Kraftspitze kann die Verletzungsgefahr beim Aufprall des Fahrzeugführers auf die Lenkradeinheit verringern, wodurch die Personenschutzwirkung der als Sicherheitsbauteil ausgelegten Lenkradeinheit verbessert wird.

Die vorliegende Erfindung beschäftigt sich mit dem Problem, eine Lenkradeinheit der eingangs genannten Art hinsichtlich ihrer Personenschutzwirkung zu verbessern.

Dieses Problem wird erfindungsgemäß durch eine Lenkradeinheit mit den Merkmalen des Anspruchs 1 gelöst.

Die Erfindung beruht auf dem allgemeinen Gedanken, den Lenkradkranz über seine Speichen am Mittelteil in Richtung Anschlußnabe abzustützen. Durch diese Bauweise werden Kräfte, die im Crashfall vom Fahrzeugführer auf den Lenkradkranz eingeleitet werden, unverzögert auch auf das Mittelteil übertragen. Dies hat zur Folge, daß sich die vom Fahrzeugführer auf die Lenkradeinheit übertragenen Kräfte bis zu einem Wert aufbauen, bei dem die Speichen des Lenkradkranzes und das Distanzelement des Mittelteils gleichzeitig versagen. Das bedeutet, daß sich bei der erfindungsgemäßen Lenkradeinheit nur eine einzige Kraftspitze aufbauen kann, wodurch die Verletzungsgefahr beim Aufprall auf die Lenkradeinheit reduziert ist.

Zweckmäßig kann das Mittelteil einen drehfest daran angebrachten Lagerträger aufweisen, an dem die Speichen drehbar gelagert und abgestützt sind und an dem das dem Mittelteil zugewandte Ende des Distanzelements drehfest befestigt ist. An einem solchen Lagerträger kann die Lagerung der Speichen am Mittelteil besonders günstig so gestaltet werden, daß diese auch zur Übertragung der Aufprallkräfte geeignet ist. Ein solcher Lagerträger kann außerdem besonders einfach hinreichend stabil ausgebildet werden, um die abzustützenden Kräfte sicher auf das Distanzelement einzuleiten.

Bei einer besonderen Ausführungsform kann sich jede Speiche in einem vom Lenkradkranz abgewandten Abschnitt aufgabeln und einen an der Anschlußnabe befestigten ersten Schenkel und einen am Mittelteil abgestützten und gelagerten zweiten Schenkel aufweisen. Die Speichen sind dadurch relativ preiswert herstellbar. Die Formgebung der einzelnen Schenkel kann hinsichtlich der jeweils zugeordneten Funktion optimiert werden. Beispielsweise ist der erste Schenkel zur Drehmomentübertragung und Aufprallkraftübertragung zwischen Lenkradkranz und Anschlußnabe geformt, während der zweite Schenkel zur Kraftübertragung zwischen Lenkradkranz und Mittelteil geformt ist. Insbesondere kann der erste Schenkel einen Verformungsabschnitt aufweisen, die ab einer vorbestimmten Abstützkraft in Form einer Rollbiegeverformung ein Versagen mit Energieaufnahme der jeweiligen Speiche bewirkt.

Bei einer anderen Ausführungsform kann jede Speiche zweiteilig ausgebildet sein, wobei ein erstes Speichenteil am Lenkradkranz befestigt und am Mittelteil gelagert und abgestützt ist, während ein zweites Speichenteil am ersten Speichenteil befestigt und an der Anschlußnabe befestigt ist. Diese Ausführungsform ermöglicht insbesondere eine hinsichtlich der jeweilige Funktion der Speichenteile optimierte Materialauswahl. Während das erste Speichenteil eine direkte Kraftübertragung zur Mitnahme des Mittelteils im Crashfall erzeugen soll, kann das zweite Speichenteil so ausgebildet sein, daß es im Crashfall primär unter Energieabsorption plastisch verformt wird. Zweckmäßig weist das zweite Speichenteil einen bereits oben erwähnten Verformungsabschnitt auf.

Gemäß einer besonderen Weiterbildung können die beiden Speichenteile so aneinander abgestützt und befestigt sein, daß die Speichenteile in an diese Abstützung angrenzenden Abschnitten nahezu stufenlos ineinander übergehen und zueinander fluchten. Durch diese Bauweise wird die Kraftübertragung im Crashfall vom ersten Speichenteil auf das zweite Speichenteil begünstigt, so daß sich für die gewünschte Deformation, insbesondere des zweiten Speichenteils, ein reproduzierbares Verhalten ergibt.

Da das Distanzelement im Crashfall schon bei relativ kleinen Kräften versagen soll, ist es zweckmäßig, das Distanzelement lediglich so stabil auszugestalten, daß gerade noch zulässige Kräfte bzw. Momente, die der Fahrzeugführer zufällig oder willkürlich auf das Mittelteil aufbringt, ohne Beschädigung des Distanzelements abgestützt werden können. Entsprechend einer vorteilhaften Ausführungsform kann das Distanzelement an seinem der Anschlußnabe zugeordneten Ende als Ringkörper ausgebildet sein, von dem wenigstens zwei in Umfangsrichtung des Ringkörpers voneinander beabstandete Stege ausgehen, die mit dem Mittelteil verbunden sind. Durch diese Bauweise wird die in Richtung der im Crashfall auftretenden Kräfte vorliegende Stabilität des Distanzelements erheblich reduziert. Des weiteren gewährleistet diese Bauweise eine Vergrößerung des Deformationsweges für das Mittelteil, da die voneinander beabstandeten Stege bei einer Deformation relativ spät "auf Block auflaufen". Eine weitere Reduktion der Stabilität des Distanzelements kann dadurch erreicht werden, daß die Stege mit einem Abschnitt verringerter Breite, d.h. tailliert, ausgebildet sind.

Eine weitere Besonderheit ergibt sich durch eine Ausführungsform, bei der die Speichen über einen Nabenteller mit der Anschlußnabe drehfest verbunden sind. Mit Hilfe dieses Nabentellers kann in Richtung der Wellenachse zusätzlicher Bauraum gewonnen werden, der zur Vergrößerung des Deformationsweges des Mittelteils nutzbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen:
- Figur 1 einen Längsschnitt durch eine erfindungsgemäße Lenkradeinheit bei einer ersten Ausführungsform,
- Figur 2 eine Seitenansicht auf die Lenkradeinheit, jedoch bei einer zweiten Ausführungsform
- Figur 3 eine perspektivische Ansicht auf ein Distanzelement der Lenkradeinheit bei einer besonderen Ausführungsform.

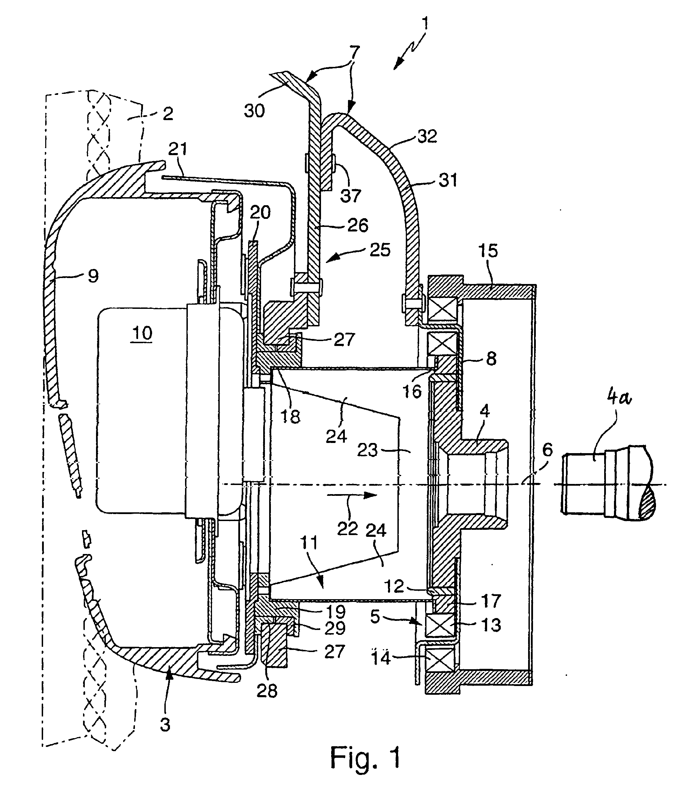

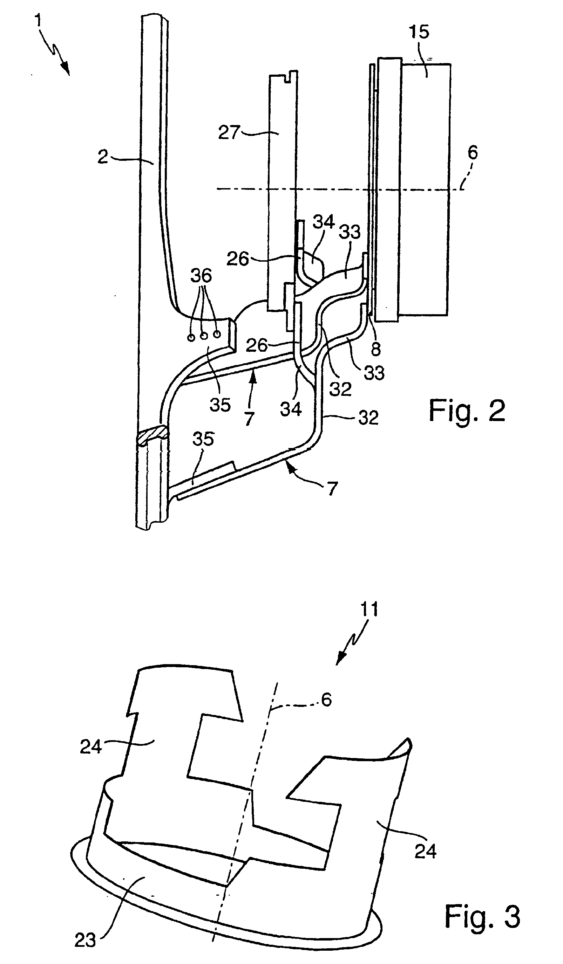

Entsprechend Figur 1 umfaßt eine Lenkradeinheit 1 nach der Erfindung einen nur teilweise dargestellten Lenkradkranz 2, ein Mittelteil 3, eine Anschlußnabe 4 sowie eine Kopplungseinrichtung 5. Die Anschlußnabe 4 ist mit einer Lenkwelle 4a einer Lenkungsanordnung eines Kraftfahrzeugs, insbesondere eines Personenkraftwagens, drehfest verbunden. Eine Längsachse oder Rotationsachse dieser Lenkwelle ist in Figur 1 mit 6 bezeichnet. Der Lenkradkranz 2 ist über mehrere Speichen 7, von denen hier lediglich eine exemplarisch dargestellt ist, an der Anschlußnabe 4 drehfest befestigt. Dabei erfolgt die Anbindung der Speichen 7 an der Anschlußnabe 4 über einen Nabenteller 8 (s. auch Fig. 2), der sowohl an der Anschlußnabe 4 als auch an den Speichen 7 drehfest befestigt ist. Der Nabenteller 8 ist topfförmig ausgebildet, wobei die Topföffnung dem Lenkradkranz 2 zugewandt ist, so daß die Anschlußnabe 4 im Nabenteller 8 versenkt angeordnet ist.

Das Mittelteil 3 weist einen Prallkörper 9 auf und enthält üblicherweise eine Airbag-Einheit 10. Dieses Mittelteil 3 und die Airbag-Einheit 10 drehen sich nicht mit, wenn die Einheit aus Lenkradkranz 2, den Speichen 7 und dem Nabenteller 8 mit der daran befestigten Anschlußnabe 4 vom Fahrer gedreht wird. Beim Betätigen des Lenkrades hat das Mittelteil 3 bzw. der Prallkörper 9 also immer dieselbe winkelmäßige Ausrichtung zum Fahrer. Das Mittelteil 3 ist hierzu über ein Distanzelement 11 und ein Gleitlager 12 an der Anschlußnabe 4 drehbar gelagert; eine relative Drehung zwischen Mittelteil und Lenkradkranz findet also im Bereich des Gleitlagers 12 statt. Um das Mittelteil gegenüber einer Drehbewegung des Lenkradkranzes stillzusetzen, ist eine berührungslos arbeitende Kopplungseinrichtung 5 vorgesehen, die im folgenden beschrieben wird.

Die Kopplungseinrichtung 5 ist in der hier gezeigten bevorzugten Ausführungsform durch ein Magnetkraftgetriebe gebildet, das zwei ringförmig angeordnete Magneteinheiten 13 und 14 aufweist. Während die eine Magneteinheit 13 drehfest mit dem Distanzelement 11 verbunden ist, ist die andere Magneteinheit 14 drehfest mit einem Magnetträger 15 verbunden, der seinerseits drehfest an ein fahrzeugfestes Bauteil, wie z.B. ein äußeres Mantelrohr der Lenkungsanordnung, anschließbar ist. Über die Magneteinheiten 13 und 14 wird eine Haltekraft bzw. ein Haltemoment zur Stillegung des Mittelteils 3 berührungslos übertragen.

Das Distanzelement 11 ist an seinem, der Anschlußnabe 4 zugeordneten Ende 16 an einem Ring 17 befestigt, der radial innen das Gleitlager 12 und radial außen die eine Magneteinheit 13 trägt. An seinem anderen, dem Mittelteil 3 zugewandten Ende 18 ist das Distanzelement 11 an einem ringförmigen Lagerträger 19 drehfest angebracht, der seinerseits drehfest mit einer Modulplatte 20 des Mittelteils 3 fest verbunden ist. An dieser Modulplatte 20 sind die Komponenten des Mittelteils 3 angebracht, beispielsweise Prallkörper 9, Airbag-Einheit 10, Lagerträger 19 sowie ein Verkleidungselement 21. Das Distanzelement 11 ist als Crashelement ausgebildet, derart, daß es ab einem vorbestimmten Versagenswert einer das Mittelteil 3 entsprechend einem Pfeil 22 in Richtung Anschlußnabe 4 antreibenden Kraft versagt. Zu diesem Zweck besteht das Distanzelement 11 im wesentlichen aus einem Ringkörper 23, der an der Anschlußnabe 4 gelagert ist, und aus mehreren Stegen 24, die vom Ringkörper 23 in Richtung Mittelteil 3 abstehen und an diesem bzw. an dessen Lagerträger 19 befestigt sind. In der in Figur 1 gezeigten Ausführungsform sind zwei Stege 24 vorgesehen, die diametral gegenüberliegend am Ringkörper 23 angeordnet sind. Ebenso können bei einer anderen Ausführungsform auch mehr als zwei Stege 24 in Umfangsrichtung des Ringkörpers 23 voneinander beabstandet angeordnet sein. Die Formgebung der Stege 24 ist gemäß Figur 1 so gewählt, daß sich die Stege 24 ausgehend vom Ringkörper 23 bis zum Lagerträger 19 verjüngen. Zweckmäßig ist das Distanzelement 11 hinsichtlich seiner Stabilität, z.B. durch entsprechende Formgebung, Materialstärke und Materialauswahl, so dimensioniert, daß das Distanzelement 11 gerade noch zulässige Kräfte in Richtung des Pfeils 22 sowie Drehmomente bezüglich der Rotationsachse 6 unbeschädigt übertragen kann.

Erfindungsgemäß stützt sich der Lenkradkranz 2 im Crashfall über seine Speichen 7 an einer mit 25 bezeichneten Abstützstelle am Mittelteil 3 ab. Diese Abstützung erfolgt dabei so, daß auf den Lenkradkranz 2 einwirkende Kräfte in Richtung des Pfeils 22 über die Speichen 7 auf das Mittelteil 3 übertragen werden, so daß im Crashfall bei einer Verstellbewegung des Lenkradkranzes 2 in Richtung des Pfeils 22 das Mittelteil 3 über die Speichen 7 mitgenommen wird. Die Abstützung der Speichen 7 erfolgt dabei über einen Stützarm 26, der mit einem Stützring 27 fest verbunden ist. Dieser Stützring 27 ist am Lagerträger 19 mittels Gleitlagerringen 28 und 29 radial und axial gelagert, wobei der Stützring 27 relativ zum Lagerträger 19 drehbar ist. Die Festigkeitswerte der einzelnen Komponenten sind so aufeinander abgestimmt, daß über die Stützarme 26 der Speichen 7 so große Kräfte in Richtung des Pfeils 22 auf das Distanzelement 11 aufgebracht werden können, daß dieses deformiert wird bzw. gewollt versagt. Der Versagenswert ist die Kraft, ab der eine plastische Verformung der Speichen bzw. des Distanzelements eintritt. Insbesondere sind dazu die Materialstärken der Speichen 7 sowie des Abstützrings 27 und des Lagerträgers 19 deutlich größer als diejenige des Distanzelements 11.

Der Nabenteller 8 besitzt ebenfalls eine relativ kleine Wandstärke, wodurch er problemlos einen Spalt zwischen den Magneteinheiten 13 und 14 durchdringen kann. Durch diese Bauweise kann die Anschlußnabe 4 in Richtung Lenkwelle versetzt werden, wodurch sich der Abstand zwischen Anschlußnabe 4 und Mittelteil 3 vergrößert. In entsprechender Weise nimmt dadurch der zur Verfügung stehende Deformationsweg zu. Der Nabenteller 8 ist zweckmäßig aus einem Werkstoff gebildet, der die Magnetkraftübertragung zwischen den Magneteinheiten 13 und 14 nicht oder nur unwesentlich stört.

Entsprechend der in Figur 1 gezeigten Ausführungsform sind die Speichen 7 zweiteilig ausgebildet. Ein erstes Speichenteil 30 ist an einer hier nicht erkennbaren Stelle am Lenkradkranz 2 befestigt. Etwa auf der Höhe des Stützrings 27 ist das erste Speichenteil 30 zur Rotationsachse 6 hin abgewinkelt, wobei der so abgewinkelte Abschnitt dann den Stützarm 26 bildet. Ein zweites Speichenteil 31 ist einerseits, z.B. über eine Vernietung 37, mit dem ersten Speichenteil 30 fest verbunden und über den Nabenteller 8 drehfest an der Anschlußnabe 4 angebracht. Entsprechend der hier gezeigten bevorzugten Ausführungsform erfolgt die Anbindung der beiden Speichenteile 30 und 31 aneinander so, daß die beiden Speichenteile 30 und 31 an den aneinander angrenzenden Abschnitten nahezu stufenlos ineinander übergehen und zueinander fluchten. Diese Bauweise verbessert einerseits die Kraftübertragung zwischen den beiden Speichenteilen 30, 31 und ermöglicht andererseits eine ästhetische Aufwertung der Außenkontur der Lenkradeinheit 1. Das zweite Speichenteil 31 weist einen stufenförmigen Verformungsabschnitt 32 auf, der ab einem vorbestimmten Versagenswert einer den Lenkradkranz 2 in Richtung des Pfeils 22 antreibenden Kraft nachgibt und so eine energieabsorbierende Rollbiegeverformung des zweiten Speichenteils 31 ermöglicht.

Die zweiteilige Bauweise der Speichen 7 ermöglicht eine geeignete Materialauswahl für die beiden Speichenteile 30 und 31. Während das erste Speichenteil 30 zur Übertragung der Versagenskräfte auf das Distanzelement 11 ausgelegt sein kann, ist es zweckmäßig, das zweite Speichenteil 31 hinsichtlich einer möglichst hohen Energieaufnahme bei seiner Verformung zu optimieren.

Entsprechend Figur 2 können bei einer anderen Ausführungsform die Speichen 7 einteilig ausgebildet sein und sich in einem vom Lenkradkranz 2 abgewandten Abschnitt aufgabeln. Durch diese Aufgabelung besitzen die Speichen 7 dann jeweils einen ersten Schenkel 33 und zweiten Schenkel 34. Während der erste Schenkel 33 über den Nabenteller 8 an der Anschlußnabe 4 befestigt ist, stützt sich der zweite Schenkel 34 über den Stützring 27 am in Figur 2 nicht dargestellten Mittelteil 3 ab. Dementsprechend bildet der zweite Schenkel 34 bei dieser Ausführungsform den Stützarm 26. Der die Gabelung aufweisende Abschnitt der Speiche 7 ist etwa zwischen Anschlußnabe 4 bzw. Magnetträger 15 und Mittelteil 3 bzw. Stützring 27 zur Rotationsachse 6 hin umgebogen, wodurch in diesem Abschnitt, respektive im ersten Schenkel 33 wieder ein Verformungsabschnitt 32 ausgebildet ist, der im Crashfall eine Rollbiegeverformung der Speiche 7 ermöglicht. Die Formgebung der beiden Schenkel 33 und 34 kann zweckmäßig wieder an deren Funktion angepaßt werden. Im Crashfall können die auf den Lenkradkranz 2 einwirkenden Kräfte über die Speichen 7 und deren zweite Schenkel 34 auf das Mittelteil 3 bzw. auf das darunter liegende Distanzelement 11 übertragen werden. Sobald die Speichen 7 versagen, sobald also die Biegeverformung der Speichen 7 erfolgt, versagt zwangsläufig auch das Distanzelement 11, so daß die gesamte Lenkradeinheit 1 im Crashfall mit nur einer Spannungsspitze nachgibt. Die zweiten Schenkel 34 wirken dabei quasi als Mitnehmer für das Mittelteil 3.

Die Anbindung der Speichen 7 an den Lenkradkranz 2 erfolgt hier über am Lenkradkranz 2 angeformte Ansätze 35, an denen die Speichen 7, z.B. durch Schweißpunkte 36, befestigt sind.

Entsprechend Figur 3 kann das Distanzelement 11 bei einer besonderen Ausführungsform zwei taillierte Stege 24 aufweisen, die vom Ringkörper 23 ausgehen und sich dabei koaxial und kreisbogenförmig zur Rotationsachse 6 erstrecken. Das Distanzelement 11 bildet hierbei ein Crashelement, dessen Tragfähigkeit kaum über die im Normalbetrieb noch zulässigen, auf das Lenkrad aufgebrachten Kräfte bzw. Momente hinausgeht. Gleichzeitig gewährleistet die Ausbildung der zwei Stege 24 einen relativ großen Deformationsweg parallel zur Rotationsachse 6, da die Stege 24 erst nach einem relativ großen Deformationsweg soweit zusammengequetscht bzw. "auf Block gefahren" sind, daß eine weitergehende Deformation nur in Verbindung mit einem steilen Kraftanstieg möglich ist.

Der Versagenswert des Distanzelements 11 ist kleiner, vorzugsweise erheblich kleiner, als der Versagenswert der Speichen 7. Auf diese Weise wird gewährleistet, daß durch die Mitnahme des Mittelteils 3 durch die daran angreifenden Speichen 7 die zum Versagen der Speichen 7 erforderliche Kraft nicht oder nur unwesentlich ansteigt.

Obwohl das hier gezeigte Ausführungsbeispiel eine als Magnetkraftgetriebe ausgebildete Kopplungseinrichtung 5 zeigt, ist die vorliegende Erfindung nicht auf eine derartige Ausführungsform der Kopplungseinrichtung 5 beschränkt. Die Kopplungseinrichtung 5 kann insbesondere auch durch ein Zahnradgetriebe realisiert werden.

## Patentansprüche

1. Lenkradeinheit für ein Kraftfahrzeug, insbesondere Personenkraftwagen, mit
- einer Anschlußnabe (4), die mit einer Lenkwelle (4a) einer Lenkungsanordnung drehfest verbindbar ist,
- einem Lenkradkranz (2), der über Speichen (7) drehfest mit der Anschlußnabe (4) verbunden ist,
- einem Mittelteil (3), das über ein Distanzelement (11) relativ zu Lenkwelle und Lenkradkranz (2) drehbar an der Anschlußnabe (4) gelagert ist, und
- einer Kopplungseinrichtung (5), die das Mittelteil (3) gegenüber einer Drehbewegung des Lenkradkranzes (2) stillsetzt,
- wobei das Distanzelement (11) an einem Ende drehfest mit dem Mittelteil (3) verbunden ist, und am anderen Ende drehbar an der Anschlußnabe (4) gelagert ist und als Crashelement ausgebildet ist, das ab einem vorbestimmten Versagenswert einer das Mittelteil (3) in Richtung Anschlußnabe (4) antreibenden Kraft versagt,
**dadurch gekennzeichnet, daß** der Lenkradkranz (2) über seine Speichen (7) am Mittelteil (3) zumindest in einer vom Lenkradkranz (2) zur Anschlußnabe (4) führenden Richtung abgestützt ist, wobei die Speichen (7) im Bereich ihrer Abstützung (25) drehbar am Mittelteil (3) gelagert sind.

2. Lenkradeinheit nach Anspruch 1,
**dadurch gekennzeichnet, daß** das Mittelteil (3) einen drehfest daran angebrachten Lagerträger (19) aufweist, an dem die Speichen (7) drehbar gelagert und abgestützt sind und an dem das dem Mittelteil (3) zugewandte Ende (18) des Distanzelements (11) drehfest befestigt ist.

3. Lenkradeinheit nach Anspruch 1 oder 2,
**dadurch gekennzeichnet, daß** sich jede Speiche (7) in einem vom Lenkradkranz (2) abgewandten Abschnitt aufgabelt und einen an der Anschlußnabe (4) befestigten ersten Schenkel (33) und einen am Mittelteil (3) abgestützten und gelagerten zweiten Schenkel (34) aufweist.

4. Lenkradeinheit nach Anspruch 3,
**dadurch gekennzeichnet, daß** die Speichen (7) in einem an die Anschlußnabe (4) angrenzenden Abschnitt einen Verformungsabschnitt (32) bilden, der ab einem vorbestimmten Versagenswert einer den Lenkradkranz (2) in Richtung Anschlußnabe (4) antreibenden Kraft nachgibt, wobei der erste Schenkel (33) den Verformungsabschnitt (32) aufweist.

5. Lenkradeinheit nach Anspruch 1 oder 2,
**dadurch gekennzeichnet, daß** jede Speiche (7) zweiteilig ausgebildet ist, wobei ein erstes Speichenteil (30) am Lenkradkranz (2) befestigt und am Mittelteil (3) gelagert und abgestützt ist, wobei ein zweites Speichenteil (31) am ersten Speichenteil (30) befestigt und an der Anschlußnabe (4) befestigt ist.

6. Lenkradeinheit nach Anspruch 5,
**dadurch gekennzeichnet, daß** die Speichen (7) in einem an die Anschlußnabe (4) angrenzenden Abschnitt einen Verformungsabschnitt (32) bilden, der ab einem vorbestimmten Versagenswert einer den Lenkradkranz (2) in Richtung Anschlußnabe (4) antreibenden Kraft nachgibt, wobei das zweite Speichenteil (31) den Verformungsabschnitt (32) aufweist.

7. Lenkradeinheit nach Anspruch 5 oder 6,
**dadurch gekennzeichnet, daß** die beiden Speichenteile (30, 31) so aneinander abgestützt und befestigt sind, daß die Speichenteile (30, 31) in an diese Abstützung angrenzenden Abschnitten nahezu stufenlos ineinander übergehen.

8. Lenkradeinheit nach Anspruch 4 oder 6,
**dadurch gekennzeichnet, daß** der Versagenswert des Distanzelements (11) kleiner ist als der Versagenswert der Speichen (7).

9. Lenkradeinheit nach einem der Ansprüche 1 bis 8,
**dadurch gekennzeichnet, daß** das Distanzelement (11) an seinem der Anschlußnabe (4) zugeordneten Ende (16) als Ringkörper (23) ausgebildet ist, von dem wenigstens zwei in Umfangsrichtung des Ringkörpers (23) voneinander beabstandete Stege (24) ausgehen, die mit dem Mittelteil (3) verbunden sind.

10. Lenkradeinheit nach Anspruch 9,
**dadurch gekennzeichnet, daß** die Stege (24) mit einem Abschnitt verringerter Breite ausgebildet sind.

11. Lenkradeinheit nach einem der Ansprüche 1 bis 10,
**dadurch gekennzeichnet, daß** die Speichen (7) über einen Nabenteller (8) mit der Anschlußnabe (4) drehfest verbunden sind.

12. Lenkradeinheit nach einem der Ansprüche 1 bis 11,
**dadurch gekennzeichnet, daß** die Kopplungseinrichtung (5) ein Magnetkraftgetriebe mit wenigstens zwei Magnetanordnungen (13, 14) oder ein Zahnradgetriebe mit wenigstens zwei Zahnrädern aufweist.

## Claims

1. A steering wheel unit for a motor vehicle, in particular a passenger car, comprising
- a connection hub (4) adapted to be connected with a steering shaft (4a) of a steering arrangement for joint rotation therewith,
- a steering wheel rim (2) connected by means of spokes (7) with the connection hub (4) for joint rotation therewith,
- a central piece (3) mounted by means of a spacer element (11) on the connection hub (4) for rotation relative to the steering shaft and the steering wheel rim (2), and
- a coupling device (5) which arrests the central piece (3) with respect to a rotational movement of the steering wheel rim (2),
- the spacer element (11) being connected at one end with the central piece (3) for joint rotation therewith, and being rotatably mounted at the other end on the connection hub (4) and being constructed as a crash element which fails as from a predetermined failure value of a force driving the central piece (3) towards the connection hub (4),
**characterized in that** the steering wheel rim (2) is supported by means of its spokes (7) on the central piece (3) at least in a direction leading from the steering wheel rim (2) to the connection hub (4), the spokes (7) being rotatably mounted on the central piece (3) in the region of their support (25).

2. The steering wheel unit according to Claim 1,
**characterized in that** the central piece (3) has a bearing carrier (19) fitted thereto for joint rotation therewith, the spokes (7) being rotatably mounted and supported on the bearing carrier (19), and the end (18) of the spacer element (11) facing the central piece (3) being fastened to the bearing carrier (19) for joint rotation therewith.

3. The steering wheel unit according to Claim 1 or 2,
**characterized in that** each spoke (7) bifurcates in a section facing away from the steering wheel rim (2) and has a first arm (33) fastened to the connection hub (4) and a second arm (34) supported by and mounted on the central piece (3).

4. The steering wheel unit according to Claim 3,
**characterized in that** the spokes (7), in a section adjoining the connection hub (4), form a deformation section (32) which yields as from a predetermined failure value of a force driving the steering wheel rim (2) towards the connection hub (4), the first arm (33) having the deformation section (32).

5. The steering wheel unit according to Claim 1 or 2,
**characterized in that** each spoke (7) is constructed in two parts, a first spoke part (30) being fastened to the steering wheel rim (2) and being mounted on and supported by the central piece (3), a second spoke part (31) being fastened to the first spoke part (30) and being fastened to the connection hub (4).

6. The steering wheel unit according to Claim 5,
**characterized in that** the spokes (7), in a section adjoining the connection hub (4), form a deformation section (32) which yields as from a predetermined failure value of a force driving the steering wheel rim (2) towards the connection hub (4), the second spoke part (31) having the deformation section (32).

7. The steering wheel unit according to Claim 5 or 6,
**characterized in that** the two spoke parts (30, 31) are supported by and fastened to each other such that the spoke parts (30, 31), in sections adjoining this support, continue into each other almost without a step.

8. The steering wheel unit according to Claim 4 or 6,
**characterized in that** the failure value of the spacer element (11) is smaller than the failure value of the spokes (7).

9. The steering wheel unit according to any of Claims 1 to 8,
**characterized in that** the spacer element (11) is constructed at its end (16) associated with the connection hub (4) as an annular body (23), from which at least two webs (24) project which are spaced apart from each other in the peripheral direction of the annular body (23) and are connected with the central piece (3).

10. The steering wheel unit according to Claim 9,
**characterized in that** the webs (24) are constructed to have a portion having a reduced width.

11. The steering wheel unit according to any of Claims 1 to 10,
**characterized in that** the spokes (7) are connected by means of a hub plate (8) with the connection hub (4) for joint rotation therewith.

12. The steering wheel unit according to any of Claims 1 to 11,
**characterized in that** the coupling device (5) has a magnetic force gearing with at least two magnet arrangements (13, 14) or a toothed gearing with at least two toothed wheels.

## Revendications

1. Unité de volant de direction pour un véhicule automobile, en particulier pour une voiture particulière, comportant
- un moyeu de raccordement (4) qui peut être relié solidaire en rotation avec un arbre de direction (4a) d'un agencement de direction,
- une couronne de volant de direction (2) qui est reliée au moyeu de raccordement (4) par l'intermédiaire de rayons (7),
- une partie médiane (3) qui est montée rotative sur le moyeu de raccordement (4) par l'intermédiaire d'un élément espaceur (11), par rapport à l'arbre de direction et à la couronne de volant de direction (2),
- un dispositif d'accouplement (5) qui arrête la partie médiane (3) par rapport à un mouvement de rotation de la couronne de volant de direction (2),
- l'élément espaceur (11) étant relié de manière solidaire en rotation à la partie médiane (3), à une extrémité, et étant monté rotatif sur le moyeu de raccordement (4), à l'autre extrémité, et étant réalisé sous forme d'élément de collision qui cède à partir d'une valeur de défaillance prédéterminée d'une force entraînant la partie médiane (3) en direction du moyeu de raccordement (4),
**caractérisée en ce que** la couronne de volant de direction (2) est soutenue par l'intermédiaire de ses rayons (7) sur la partie médiane (3) au moins dans une direction menant depuis la couronne de volant de direction (2) jusqu'au moyeu de raccordement (4), les rayons (7) étant montés rotatifs sur la partie médiane (3) dans la région de leur soutien (25).

2. Unité de volant de direction selon la revendication 1,
**caractérisée en ce que** la partie médiane (3) présente un support d'appui (19) monté solidaire en rotation sur celle-ci, sur lequel les rayons (7) sont montés en rotation et soutenus, et sur lequel est fixée de manière solidaire en rotation l'extrémité (18) de l'élément espaceur (11), qui est tournée vers la partie médiane (3).

3. Unité de volant de direction selon la revendication 1 ou 2,
**caractérisée en ce que** chaque rayon (7) bifurque dans un tronçon détourné de la couronne de volant de direction (2) et présente une première branche (33) fixée sur le moyeu de raccordement (4) et une deuxième branche (34) soutenue et montée sur la partie médiane (3).

4. Unité de volant de direction selon la revendication 3,
**caractérisée en ce que** les rayons (7) forment dans un tronçon adjacent du moyeu de raccordement (4) un tronçon de déformation (32) qui cède à partir d'une valeur de défaillance prédéterminée d'une force entraînant la couronne de volant de direction (2) en direction du moyeu de raccordement (4), la première branche (33) présentant le tronçon de déformation (32).

5. Unité de volant de direction selon la revendication 1 ou 2,
**caractérisée en ce que** chaque rayon (7) est réalisé en deux parties, une première partie de rayon (30) étant fixée sur la couronne de volant de direction (2) et montée ainsi que soutenue sur la partie médiane (3), une deuxième partie de rayon (31) étant fixée sur la première partie de rayon (30) et fixée sur le moyeu de raccordement (4).

6. Unité de volant de direction selon la revendication 5,
**caractérisée en ce que** les rayons (7) forment dans un tronçon adjacent au moyeu de raccordement (4) un tronçon de déformation (32) qui cède à partir d'une valeur de défaillance prédéterminée d'une force entraînant la couronne de volant de direction (2) en direction du moyeu de raccordement (4), la deuxième partie de rayon (31) présentant le tronçon de déformation (32).

7. Unité de volant de direction selon la revendication 5 ou 6,
**caractérisée en ce que** les deux parties de rayon (30, 31) sont soutenues et fixées l'une à l'autre de telle sorte que les parties de rayon (30, 31) passent de façon presque continue l'une dans l'autre, dans des tronçons adjacents à ce soutien.

8. Unité de volant de direction selon la revendication 4 ou 6,
**caractérisée en ce que** la valeur de défaillance de l'élément espaceur (11) est inférieure à la valeur de défaillance des rayons (7).

9. Unité de volant de direction selon l'une des revendications 1 à 8,
**caractérisée en ce que** l'élément espaceur (11) est réalisé à son extrémité associée au moyeu de raccordement (4) sous forme de corps annulaire (23), depuis lequel partent au moins deux entretoises (24) espacées l'une de l'autre en direction périphérique du corps annulaire (23), lesquelles sont reliées à la partie médiane (3).

10. Unité de volant de direction selon la revendication 9,
**caractérisée en ce que** les entretoises (24) sont réalisés avec un tronçon de largeur réduite.

11. Unité de volant de direction selon l'une des revendications 1 à 10,
**caractérisée en ce que** les rayons (7) sont reliées de manière solidaire en rotation au moyeu de raccordement (4) par l'intermédiaire d'un plateau de moyeu (8).

12. Unité de volant de direction selon l'une des revendications 1 à 11,
**caractérisée en ce que** le dispositif d'accouplement (5) présente une transmission à force magnétique avec au moins deux agencements magnétiques (13, 14) ou une transmission par engrenage avec au moins deux roues dentées.
